# EUROPEAN PATENT APPLICATION

(11) **EP 4 567 932 A1**
(43) Date of publication of application: **11.06.2025**
(21) Application number: 23849800.0
(22) Date of filing: 28.06.2023
(51) Int. Cl.: H01M 4/525, C01G 53/00, H01M 4/36, H01M 4/505

(54) **POSITIVE ELECTRODE ACTIVE MATERIAL FOR NONAQUEOUS ELECTROLYTE SECONDARY BATTERY, AND NONAQUEOUS ELECTROLYTE SECONDARY BATTERY**

(30) Priority: 05.08.2022 JP 2022125741
(71) Applicant: Panasonic Intellectual Property Management Co., Ltd., Kadoma-shi, Osaka 571-0057 (JP)
(72) Inventor: JITO, Daizo, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP); AOKI, Yoshinori, Kadoma-shi, Osaka 571-0057 (JP); FUJITANI, Naoya, Kadoma-shi, Osaka 571-0057 (JP)
(74) Representative: Novagraaf International SA
(86) International application number: PCT/JP2023/023995
(87) International publication number: WO 2024/029241

(57) **Abstract**

Provided is a positive electrode active material which contributes to improvement of charge/discharge cycle characteristics of a nonaqueous electrolyte secondary battery.
This positive electrode active material contained in the nonaqueous electrolyte secondary battery has a layered structure and contains a lithium transition metal composite oxide having a predetermined composition. The lithium transition metal composite oxide contains secondary particles formed from aggregates of primary particles, wherein: a first surface decorative layer, which contains a Ca element and/or an Sr element and at least one kind of element selected from the group consisting of W, Mo, Ti, Si, Nb, and Zr, is present on the surface of the primary particles; and a second surface decorative layer, which contains at least one kind of element selected from the group consisting of Al, Zr, B, W, Ti, Mg, Co, and Si, is present on the surface of the secondary particles.

## Description

### TECHNICAL FIELD

The present disclosure relates to a positive electrode active material for non-aqueous electrolyte secondary battery and a non-aqueous electrolyte secondary battery.

### BACKGROUND

In recent years, applications of non-aqueous electrolyte secondary batteries have expanded to power sources for electric vehicles and power storage devices for utilizing renewable natural energy. Characteristics required in positive electrode active materials used in non-aqueous electrolyte secondary batteries accordingly vary depending on the applications. For example, Patent Literature 1 discloses a lithium transition metal composite oxide which contains Ca and W in a predetermined ratio in order to achieve both a favorable low-temperature output characteristic and a favorable high-temperature cycle characteristic.

### CITATION LIST

### PATENT LITERATURE

PATENT LITERATURE 1: PCT International Publication No. WO 2012/035664

### SUMMARY

A lithium transition metal composite oxide with a Ni content of greater than or equal to 75 % has a large initial charge capacity but tends to cause side reactions with a non-aqueous electrolyte, which may result in deterioration of the charge-discharge cycle characteristic. In the technique described in Patent Literature 1, no consideration has been made regarding improving battery characteristics when using a lithium transition metal composite oxide with a high Ni content, and there is still room for improvement.

An object of the present disclosure is to provide a positive electrode active material which contributes to improving the charge-discharge cycle characteristic of a non-aqueous electrolyte secondary battery.

A positive electrode active material for non-aqueous electrolyte secondary battery according to one aspect of the present disclosure includes a lithium transition metal composite oxide which has a layered structure and which is represented by general formula LiₓNiₐCo_{b}Mn_{c}M1_{d}O_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 ≤ y < 0.05, a+b+c+d = 1, and M1 is at least one element selected from the group consisting of W, Mg, Mo, Nb, Ti, Si, Al, and Zr). The lithium transition metal composite oxide includes secondary particles formed by aggregation of primary particles. A first surface modification layer containing at least one of Ca and Sr and also containing at least one element selected from the group consisting of W, Mo, Ti, Si, Nb, and Zr is present at the surface of the primary particles, and a second surface modification layer containing at least one element selected from the group consisting of Al, Zr, B, W, Ti, Mg, Co, and Si is present at the surface of the secondary particles.

A non-aqueous electrolyte secondary battery according to one aspect of the present disclosure includes a positive electrode containing the above-described positive electrode active material, a negative electrode, and a non-aqueous electrolyte.

According to the positive electrode active material for non-aqueous electrolyte secondary battery according to one aspect of the present disclosure, a non-aqueous electrolyte secondary battery having an improved charge-discharge cycle characteristic can be provided.

### BRIEF DESCRIPTION OF DRAWINGS

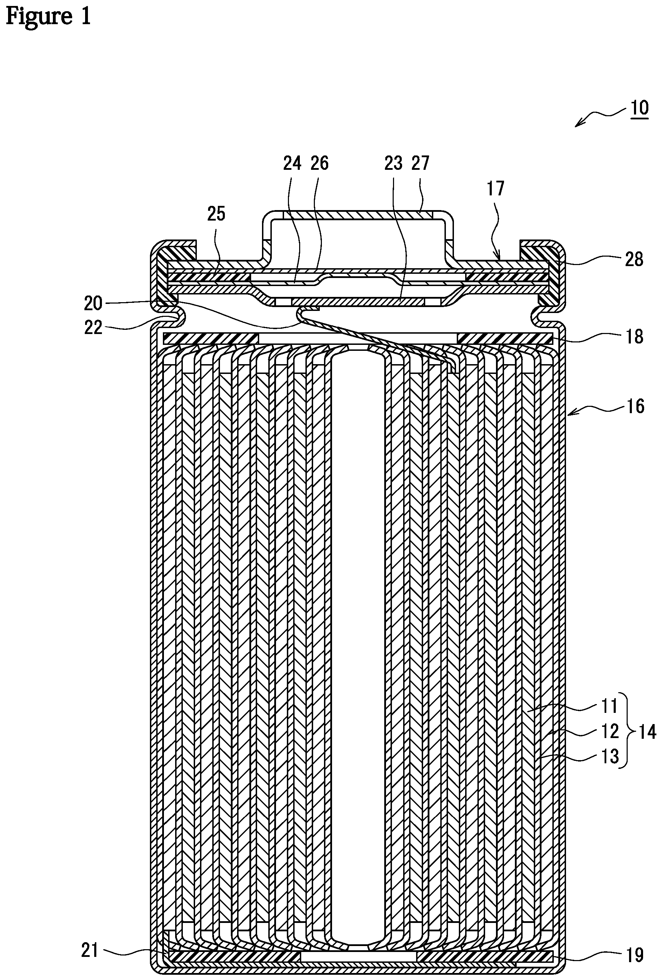

FIG. 1 is a longitudinal cross-sectional view of a non-aqueous electrolyte secondary battery according to an example embodiment.

### DESCRIPTION OF EMBODIMENTS

A layered structure of a lithium transition metal composite oxide includes a transition metal layer and a Li layer, and battery charge-discharge reaction proceeds as Li ions present in the Li layer reversibly move in and out. A lithium transition metal composite oxide containing Ni as the main component is generally known as a high-capacity positive electrode active material, and the Ni content in the lithium transition metal composite oxide is preferably greater than or equal to 75 mol% based on the total number of moles of metal elements other than Li. In addition to Ni, the lithium transition metal composite oxide may contain Co in an amount in the range from 0 mol% to 15 mol%, Mn in an amount in the range from 0 mol% to 25 mol%, and M1 in an amount in the range from 0 mol% to 10 mol% (M1 is at least one element selected from W, Mg, Mo, Nb, Ti, Si, Al, and Zr), where the amounts are based on the total number of moles of metal elements other than Li. However, a secondary battery using such a lithium transition metal composite oxide may undergo deterioration of the charge-discharge cycle characteristic due to side reactions with the non-aqueous electrolyte.

The present inventors have conducted intensive studies to solve the above problem, and have found as a result that the charge-discharge cycle characteristic is improved by forming a first surface modification layer containing at least one element selected from Ca and Sr and also containing at least one element selected from the group consisting of W, Mo, Ti, Si, Nb, and Zr at the surface of the primary particles of the lithium transition metal composite oxide, and forming a second surface modification layer containing at least one element selected from the group consisting of Al, Zr, B, W, Ti, Mg, Co, and Si at the surface of the secondary particles of the lithium transition metal composite oxide. It is presumed that the second surface modification layer protects the surface of the secondary particles and the first surface modification layer and thereby suppresses side reactions with the non-aqueous electrolyte, so that the charge-discharge cycle characteristic is specifically improved.

An example embodiment of a non-aqueous electrolyte secondary battery according to the present disclosure will now be described in detail. Although a cylindrical battery in which a spiral-type electrode assembly is housed in a cylindrical outer casing is described below as an example, the electrode assembly is not limited to being of a spiral type, and may be of a laminated type formed by alternately laminating a plurality of positive electrodes and a plurality of negative electrodes one by one via separators. Further, the outer casing is not limited to being cylindrical, and may be, for example, rectangular, coin-shaped, or the like, or may be a battery housing composed of a laminate sheet including a metal layer and a resin layer.

FIG. 1 is an axial cross-sectional view of a cylindrical secondary battery 10 according to an example embodiment. As shown in FIG. 1, the secondary battery 10 comprises a spiral-type electrode assembly 14, an electrolyte, and an outer casing 16 that houses the electrode assembly 14 and the electrolyte. The electrode assembly 14 includes a positive electrode 11, a negative electrode 12, and separators 13, and has a spiral structure formed by winding the positive electrode 11 and the negative electrode 12 in a spiral shape with the separators 13 interposed. The outer casing 16 is a bottomed cylindrical metal container having an opening at one axial end, and the opening of the outer casing 16 is closed by a sealing assembly 17. In the following description, for convenience of explanation, the side of the battery toward the sealing assembly 17 will be referred to as "upper", and the side toward the bottom portion of the outer casing 16 will be referred to as "lower".

The positive electrode 11, the negative electrode 12, and the separators 13, which constitute the electrode assembly 14, are all elongate rectangular members, and are alternately laminated in the radial direction of the electrode assembly 14 by being wound lengthwise in a spiral shape. The separators 13 isolate the positive electrode 11 and the negative electrode 12 from each other. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction. The separators 13 provided as two sheets are formed to have a size slightly larger than at least the positive electrode 11, and are arranged, for example, to sandwich the positive electrode 11. The electrode assembly 14 has a positive electrode lead 20 connected to the positive electrode 11 by welding or the like, and a negative electrode lead 21 connected to the negative electrode 12 by welding or the like. In the electrode assembly 14, the lengthwise direction of the positive electrode 11 and the negative electrode 12 corresponds to the winding direction, and the widthwise direction of the positive electrode 11 and the negative electrode 12 corresponds to the axial direction. That is, the end faces, in the widthwise direction, of the positive electrode 11 and the negative electrode 12 form the axial end faces of the electrode assembly 14.

Above and below the electrode assembly 14, insulation plates 18, 19 are provided respectively. In the example shown in FIG. 1, the positive electrode lead 20 extends through a through hole in the insulation plate 18 and toward the sealing assembly 17, while the negative electrode lead 21 extends outside the insulation plate 19 and toward the bottom portion of the outer casing 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom portion of the outer casing 16, and the outer casing 16 serves as the negative electrode terminal.

A gasket 28 is provided between the outer casing 16 and the sealing assembly 17 to ensure airtightness inside the battery. The outer casing 16 has a grooved portion 22 formed thereon, where a part of a side surface portion projects inward, and which supports the sealing assembly 17. The grooved portion 22 is preferably formed in an annular shape along the circumferential direction of the outer casing 16, and supports the sealing assembly 17 on its upper surface. The sealing assembly 17 is fixed to an upper part of the outer casing 16 by means of the grooved portion 22 and an opening end of the outer casing 16 which is crimped to the sealing assembly 17.

The sealing assembly 17 has a structure obtained by laminating, in order from the electrode assembly 14 side, the internal terminal plate 23, a lower vent member 24, an insulation member 25, an upper vent member 26, and the cap 27. Each of the members constituting the sealing assembly 17 has, for example, a disk shape or a ring shape, and the respective members except the insulation member 25 are mutually electrically connected. The lower vent member 24 and the upper vent member 26 are connected to each other at their central portions, and the insulation member 25 is interposed between peripheral edge portions of these vent members. When the internal pressure of the battery increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, the separators 13, and the non-aqueous electrolyte, which constitute the secondary battery 10, and in particular regarding the positive electrode 11.

### [Positive Electrode]

The positive electrode 11 comprises, for example, a positive electrode current collector and a positive electrode mixture layer formed on a surface of the positive electrode current collector. The positive electrode mixture layer is preferably formed on both sides of the positive electrode current collector. As the positive electrode current collector, it is possible to use a foil of a metal such as aluminum or an aluminum alloy which is stable in the potential range of the positive electrode 11, a film having such a metal disposed on its surface layer, or the like. The thickness of the positive electrode current collector is, for example, greater than or equal to 10 µm and less than or equal to 30 µm.

The positive electrode mixture layer contains, for example, a positive electrode active material, a conductive agent, and a binder. The thickness of the positive electrode mixture layer is, for example, greater than or equal to 10 µm and less than or equal to 150 µm on one side of the positive electrode current collector. The positive electrode 11 can be produced, for example, by applying a positive electrode mixture slurry containing the positive electrode active material, the conductive agent, and the like onto the surfaces of the positive electrode current collector, and, after drying the applied coating, rolling the coating to form positive electrode mixture layers on both sides of the positive electrode current collector.

Examples of the conductive agent contained in the positive electrode mixture layer include carbon-based particles such as carbon black (CB), acetylene black (AB), Ketjenblack, carbon nanotubes (CNT), graphene, and graphite. A single type among these may be used alone, or two or more types may be used in combination.

Examples of the binder contained in the positive electrode mixture layer include fluororesins such as polytetrafluoroethylene (PTFE) and polyvinylidene fluoride (PVDF), polyimide resins, acrylic resins, polyolefin resins, and polyacrylonitrile (PAN). A single type among these may be used alone, or two or more types may be used in combination.

The positive electrode active material contained in the positive electrode mixture layer includes a lithium transition metal composite oxide. The lithium transition metal composite oxide includes secondary particles formed by aggregation of primary particles. The particle size of the primary particles constituting the secondary particles of the lithium transition metal composite oxide is, for example, greater than or equal to 0.02 µm and less than or equal to 2 µm. The particle size of the primary particles is measured as a diameter of a circle circumscribing a particle image observed by a scanning electron microscope (SEM). The average particle size of the secondary particles of the lithium transition metal composite oxide is, for example, greater than or equal to 2 µm and less than or equal to 30 µm. Here, the average particle size means the volume-based median diameter (D50). D50 means a particle size at which, in a volume-based particle size distribution, the cumulative frequency from the smaller particle size side reaches 50 %, and is also called the mid-level diameter. The particle size distribution of the secondary particles of the lithium transition metal composite oxide can be measured with a laser diffraction particle size distribution measuring device (e.g., MT3000II manufactured by MicrotracBEL Corp.) using water as the dispersion medium.

The lithium transition metal composite oxide has a layered structure. Examples of the layered structure of the lithium transition metal composite oxide include a layered structure belonging to the space group R-3m, and a layered structure belonging to the space group C2/m. From the perspective of achieving high capacity and stability of crystal structure, the lithium transition metal composite oxide preferably has a layered structure belonging to the space group R-3m. The layered structure of the lithium transition metal composite oxide may include a transition metal layer and a Li layer.

The lithium transition metal composite oxide is represented by general formula LiₓNiₐCo_{b}Mn_{c}M1_{d}O_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 ≤ y < 0.05, a+b+c+d = 1, and M1 is at least one element selected from the group consisting of W, Mg, Mo, Nb, Ti, Si, Al, and Zr). The content of the metal elements contained in the lithium transition metal composite oxide can be measured, for example, by inductively coupled plasma (ICP) emission spectrometry.

By setting the Ni content in the lithium transition metal composite oxide to greater than or equal to 75 mol% and less than or equal to 95 mol%, a high-capacity battery can be obtained. With a higher Ni content, a battery with a higher capacity can be obtained.

The Co content in the lithium transition metal composite oxide is greater than or equal to 0 mol% and less than or equal to 15 mol%, and Co is an optional component. In other words, the lithium transition metal composite oxide does not need to contain Co. By including Co in the lithium transition metal composite oxide, heat resistance of the battery can be improved.

The Mn content in the lithium transition metal composite oxide is greater than or equal to 0 mol% and less than or equal to 25 mol%, and Mn is an optional component. In other words, the lithium transition metal composite oxide does not need to contain Mn. By including Mn in the lithium transition metal composite oxide, the crystal structure can be stabilized.

The content of M1 (M1 is at least one element selected from the group consisting of W, Mg, Mo, Nb, Ti, Si, Al, and Zr) in the lithium transition metal composite oxide is greater than or equal to 0 mol% and less than or equal to 10 mol%, and M1 is an optional component. In other words, the lithium transition metal composite oxide does not need to contain M1.

A first surface modification layer containing at least one of Ca and Sr (hereinafter referred to as "M2") and also containing at least one element selected from the group consisting of W, Mo, Ti, Si, Nb, and Zr (hereinafter referred to as "M3") is present at the surface of the primary particles of the lithium transition metal composite oxide. This feature prevents the lithium transition metal composite oxide from being corroded or deteriorated due to side reactions with the non-aqueous electrolyte, and improves the charge-discharge cycle characteristic of the secondary battery 10. Here, the surface of the primary particles includes the surface of the secondary particles, and specifically denotes the surface of the secondary particles and the interface between the primary particles. The first surface modification layer may be present in the form of dots so as to cover at least part of the surface of the primary particles, or may be present so as to cover the entire surface of the primary particles.

The total amount of M2 contained in the first surface modification layer is preferably less than or equal to 3 mol%, more preferably less than or equal to 1 mol%, and even more preferably less than or equal to 0.5 mol%, based on the total number of moles of metal elements other than Li in the lithium transition metal composite oxide. The lower limit of the total amount of M2 is, for example, 0.01 mol%.

The total amount of M3 contained in the first surface modification layer is less than or equal to 2 mol%, more preferably less than or equal to 1 mol%, and even more preferably less than or equal to 0.5 mol%, based on the total number of moles of metal elements other than Li in the lithium transition metal composite oxide. The lower limit of the total amount of M3 is, for example, 0.01 mol%.

The presence of the first surface modification layer at the surface of the primary particles of the lithium transition metal composite oxide, the presence of M2 contained in the first surface modification layer, and the presence of M3 contained in the first surface modification layer can be confirmed by performing measurement in a cross section of the secondary particles of the lithium transition metal composite oxide using TEM-EDX (transmission electron microscopy-energy dispersive X-ray spectroscopy). Furthermore, the total amount of M2 and the total amount of M3 can each be measured by, for example, inductively coupled plasma (ICP) emission spectrometry.

A compound containing M2 (hereinafter referred to as "M2 compound") and a compound containing M3 (hereinafter referred to as "M3 compound") may each be adhered to the surface of the primary particles of the lithium transition metal composite oxide. Examples of the M2 compound include oxides, hydroxides, and carbonates that contain M2. Examples of the M3 compound include oxides, hydroxides, carbonates, and sulfates that contain M3.

A compound represented by general formula M2_{α}M3_{β}O_{γ} (where 1 ≤ α ≤ 2, 1 ≤ β ≤ 5, 4 ≤ γ ≤ 9, M2 is at least one element selected from Ca and Sr, and M3 is at least one element selected from W, Mo, Ti, Si, Nb, and Zr) (hereinafter referred to as "M2_{α}M3_{β}O_{γ} compound") may be adhered to the surface of the primary particles of the lithium transition metal composite oxide. At the surface of the primary particles of the lithium transition metal composite oxide, the M2 compound, the M3 compound, and the M2_{α}M3_{β}O_{γ} compound may coexist.

The presence of the M2_{α}M3_{β}O_{γ} compound can be confirmed using synchrotron radiation X-ray diffraction measurement. The M2_{α}M3_{β}O_{γ} compound may, for example, be present in a scattered manner at the surface of the primary particles and secondary particles of the lithium transition metal composite oxide, or may be present in the form of a layer so as to widely cover the surface of the primary particles and secondary particles. In other words, the M2_{α}M3_{β}O_{γ} compound is widely present at the surface of the primary particles in the interior and at the surface of the secondary particles. The secondary particles of the lithium transition metal composite oxide are formed by, for example, aggregation of five or more primary particles, and the surface area of the primary particles is greater in the interior than at the surface of the secondary particles. The M2_{α}M3_{β}O_{γ} compound is, for example, contained more in the interior than at the surface of the secondary particles.

Specific examples of the M2_{α}M3_{β}O_{γ} compound include CaWO₄, CaMoO₃, CaMoO₄, CaTiO₃, Ca₂TiO₄, CaSiO₃, Ca₂SiO₄, CaNbO₃, CaNb₂O₆, CaZrO₃, CaZr₄O₉, SrWO₄, SrMoO₃, SrMoO₄, SrTiO₃, Sr₂TiO₄, SrSiO₃, Sr₂SiO₄, SrNbO₃, SrNb₂O₆, SrZrO₃, and SrZr₄O₉.

A second surface modification layer containing at least one element selected from the group consisting of Al, Zr, B, W, Ti, Mg, Co, and Si (hereinafter referred to as "M4") is present at the surface of the secondary particles of the lithium transition metal composite oxide. Among the foregoing, Al, Zr, B, W, Ti, and Si are more preferable. The second surface modification layer protects the surface of the secondary particles and the first surface modification layer, and as a result, side reactions with the non-aqueous electrolyte are notably suppressed, and the charge-discharge cycle characteristic of the secondary battery 10 is further improved. The second surface modification layer is formed after the first surface modification layer as described further below, so that at the surface of the secondary particles, the second surface modification layer may be formed on top of the first surface modification layer. Further, the second surface modification layer may be present in the form of dots so as to cover at least part of the surface of the secondary particles, or may be present so as to cover the entire surface of the secondary particles.

The total amount of M4 contained in the second surface modification layer is preferably less than or equal to 2 mol% based on the total number of moles of metal elements other than Li in the lithium transition metal composite oxide. The lower limit of the total amount of M4 is, for example, 0.01 mol%.

The presence of the second surface modification layer at the surface of the secondary particles of the lithium transition metal composite oxide and the presence of M4 contained in the second surface modification layer can be confirmed by performing measurement in a cross section of the secondary particles of the lithium transition metal composite oxide using TEM-EDX. Here, when the amount of M4 raw material added is small, or depending on its coating state, it may be difficult to confirm the presence of the second surface modification layer. In that case, the presence of the second surface modification layer can be inferred by confirming the presence of a second surface modification layer in a sample to which a large amount of M4 raw material is added. Further, the total amount of M4 can be measured, for example, by inductively coupled plasma (ICP) emission spectrometry. When the same element is used for M3 and M4, a dummy sample to which no M4 is added may be synthesized at the same time, and the total amounts of M3 and M4 may respectively be determined from the difference in measurement values between the dummy sample and a sample in which the same element is used for M3 and M4.

The positive electrode mixture layer may contain other positive electrode active materials in addition to the above-described positive electrode active material of the present embodiment. Examples of such other positive electrode active materials include a lithium transition metal composite oxide with a Ni content of greater than or equal to 0 mol% and less than 75 mol%.

Next, an example method for producing the positive electrode active material according to the present embodiment will be described.

The production process of the positive electrode active material includes a first process of mixing a composite oxide with a Li compound and the like to obtain a mixture, a second process of firing the mixture, and a third process of washing the fired product with water and performing drying by heating. By adding an M2 raw material containing M2 (at least one element selected from Ca and Sr) and an M3 raw material containing M3 (at least one element selected from W, Mo, Ti, Si, Nb, and Zr) in the first process, a first surface modification layer containing M2 and M3 can be formed at the surface of the primary particles of the lithium transition metal composite oxide. Further, by adding an M4 raw material containing M4 (at least one element selected from the group consisting of Al, Zr, B, W, Ti, Mg, Co, and Si) in the third process, a second surface modification layer containing M4 can be formed at the surface of the secondary particles of the lithium transition metal composite oxide.

In the first process, for example, a metal oxide containing Ni in an amount in the range from 75 mol% to 95 mol%, Co in an amount in the range from 0 mol% to 15 mol%, Mn in an amount in the range from 0 mol% to 25 mol%, and M1 (M1 is at least one element selected from W, Mg, Mo, Nb, Ti, Si, Al, and Zr) in an amount in the range from 0 mol% to 10 mol% is mixed with a Li compound, an M2 raw material, and an M3 raw material to obtain a mixture.

The metal oxide can be obtained, for example, by adding dropwise an alkaline solution of sodium hydroxide or the like to a solution of a metal salt containing Ni and arbitrary metal elements (such as Co and Mn) while stirring so as to adjust the pH to the alkaline side (e.g., the range from 8.5 to 12.5), thereby causing precipitation (co-precipitation) of a composite hydroxide containing Ni and the arbitrary metal elements, and then heat-treating this composite hydroxide. The heat treatment temperature is not subjected to any particular limitation, but is, for example, in the range from 300 °C to 600 °C.

Examples of the Li compound include Li₂CO₃, LiOH, Li₂O₂, Li₂O, LiNO₃, LiNO₂, Li₂SO₄, LiOH•H₂O, LiH, and LiF. In terms of facilitating adjustment of each of the above parameters to within the ranges specified above, the mixing ratio of the metal oxide and the Li compound is preferably such that, for example, the molar ratio of the total amount of metal elements in the metal oxide to Li is in the range from 1:0.98 to 1:1.1.

Examples of the M2 raw material include Ca(OH)₂, CaO, CaCO₃, CaSO₄, Ca(NO₃)₂, Sr(OH)₂, Sr(OH)₂•8H₂O, Sr(OH)₂,•H₂O, SrO, SrCO₃, SrSO₄, and Sr(NO₃)₂, and these may be dried and dehydrated before use in order to reduce the amount of moisture generated during firing. Further, these compounds may be pulverized or the like to have a particle size of greater than or equal to 0.1 µm and less than or equal to 20 µm. Similarly, examples of the M3 raw material include hydroxides, oxides, carbonates, sulfates, and nitrates of M3 (at least one element selected from the group consisting of W, Mo, Ti, Si, Nb, and Zr), and these may be dried and dehydrated before use in order to reduce the amount of moisture generated during firing. Further, these compounds may be pulverized or the like to have a particle size of greater than or equal to 0.1 µm and less than or equal to 20 µm.

The metal oxide and the M2 raw material are preferably mixed in such a ratio that the molar ratio of the total amount of metal elements in the metal oxide to the M2 element is, for example, in the range from 1:0.0001 to 1:0.03. When plural types of M2 raw materials are used, the M2 raw materials are mixed so that the total amount of M2 contained in the compounds satisfies the above ratio. The metal oxide and the M3 raw material are preferably mixed in such a ratio that the molar ratio of the total amount of metal elements in the metal oxide to the M3 element is, for example, in the range from 1:0.0001 to 1:0.02. When plural types of M3 raw materials are used, the M3 raw materials are mixed so that the total amount of M3 contained in the compounds satisfies the above ratio.

In the second process, for example, the above mixture is fired in an oxygen atmosphere to obtain a fired product. The firing conditions may be such that the heating rate at temperatures higher than or equal to 450 °C and lower than or equal to 680 °C is more than 1.0 °C/min and less than or equal to 5.5 °C/min, and the maximum temperature reached is in the range of higher than or equal to 700 °C and lower than or equal to 980 °C. The heating rate at temperatures higher than 680 °C and up to the maximum temperature reached may be, for example, more than or equal to 0.1 °C/min and less than or equal to 3.5 °C/min. Further, the holding time of the maximum temperature reached may be more than or equal to 1 hour and less than or equal to 10 hours. This firing process may be a multi-stage firing process, and each of the first heating rate and the second heating rate may be provided as a plurality of heating rates for separate temperature ranges, so long as those heating rates are within the above-specified ranges.

In the third process, the above fired product is washed with water to obtain a cake-like composition, an M4 raw material is added thereto, and heat treatment is performed. With this process, a second surface modification layer containing M4 can be formed on the surface of the secondary particles of the lithium transition metal composite oxide. The water-washing and heat treatment processes can be carried out using known methods and conditions. The heat treatment is carried out, for example, in a vacuum, in an oxygen stream, or in atmospheric air at a temperature of higher than or equal to 150 °C and lower than or equal to 600 °C for a period of more than or equal to 1 hour and less than or equal to 5 hours.

The M4 raw material may be added to the cake-like composition before or during the heat treatment. Examples of the M4 raw material include tungsten oxide (WO₃), lithium tungstate (Li₂WO₄, Li₄WO₅, Li₆W₂O₉), boric acid (H₃BO₃), lithium borate (Li₂B₄O₇, Li₃BO₃, LiB₃O₅, LiBO₂), aluminum oxide (Al₂O₃), aluminum sulfate (Al₂(SO₄)₃), zirconium oxide (ZrO₂), zirconium sulfate (Zr(SO₄)₂), titanium oxide (TiO₂), titanium hydroxide Ti(OH)₄, magnesium oxide (MgO), magnesium hydroxide (Mg(OH)₂), cobalt oxide (CoO, Co₃O₄), cobalt sulfate (CoSO₄), silicon dioxide (SiO₂), and silicon monoxide (SiO). In order to efficiently modify the surface of the secondary particles, the M4 raw material is preferably an oxide or metal salt that is soluble in alkaline water component which is contained in the cake-like composition and which contains Li salt. The M4 raw material may be added not only in the form of a solid but also, for example, in the form of an aqueous solution obtained by dissolving the M4 raw material in an acid or the like. The adding method may comprise adding dropwise or spraying onto the cake-like composition, and for efficiently covering the surface of the secondary particles, spraying is preferred. In order to more efficiently cover the surface of the secondary particles, instead of adding to the cake-like composition obtained after the water-washing process, the M4 raw material may be added to the lithium transition metal composite oxide obtained after the water-washing and heat treatment processes, and the mixture may then be fired again in a vacuum, in an oxygen stream, or in atmospheric air at a temperature of higher than or equal to 150 °C and lower than or equal to 600 °C for a period of more than or equal to 1 hour and less than or equal to 5 hours.

The amount of the M4 raw material added is adjusted so that the ratio of M4 to the total number of moles of metal elements other than Li contained in the metal oxide is, for example, greater than or equal 0.01 mol% and less than or equal to 2 mol%. When plural types of M4 raw materials are used, the total amount of M4 added is adjusted to satisfy the above ratio.

### [Negative Electrode]

The negative electrode 12 comprises, for example, a negative electrode current collector and a negative electrode mixture layer formed on a surface of the negative electrode current collector. The negative electrode mixture layer is preferably formed on both sides of the negative electrode current collector. As the negative electrode current collector, it is possible to use a foil of a metal such as copper or a copper alloy which is stable in the potential range of the negative electrode 12, a film having such a metal disposed on its surface layer, or the like. The thickness of the negative electrode current collector is, for example, greater than or equal to 5 µm and less than or equal to 30 µm. The negative electrode mixture layer contains, for example, a negative electrode active material and a binder. The thickness of the negative electrode mixture layer is, for example, greater than or equal to 10 µm and less than or equal to 150 µm on one side of the negative electrode current collector. The negative electrode 12 can be produced, for example, by applying a negative electrode mixture slurry containing the negative electrode active material, the binder, and the like onto the surfaces of the negative electrode current collector, and, after drying the applied coating, rolling the coating to form negative electrode mixture layers on both sides of the negative electrode current collector.

No particular limitation is imposed on the negative electrode active material contained in the negative electrode mixture layer so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si and Sn, a metal compound containing Si, Sn, or the like, a lithium-titanium composite oxide, and the like may be used, and these materials having a carbon coating provided thereon may also be used. For example, in combination with graphite, it is possible to use a Si-containing compound represented by SiOₓ (where 0.5 ≤ x ≤ 1.6), a Si-containing compound in which fine particles of Si are dispersed in a lithium silicate phase represented by Li_{2y}SiO_{(2+y)} (where 0 < y < 2), or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). A single type among these may be used alone, or two or more types may be used in combination.

### [Separator]

As the separator 13, for example, a porous sheet having ion permeability and insulation property is used. Specific examples of the porous sheet include a microporous thin film, woven fabric, and non-woven fabric. As the material of the separator, polyolefins such as polyethylene and polypropylene, cellulose, and the like are suitable. The separator 13 may have a single-layer structure or a laminated structure. Further, on the surface of the separator 13, there may be provided a highly heat-resistant resin layer made of aramid resin or the like, or a filler layer containing an inorganic compound filler.

### [Non-Aqueous Electrolyte]

The non-aqueous electrolyte contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least part of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borate salts such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊ₗSO₂) (where each of l and m is an integer of 0 or greater). As the lithium salt, a single type among these may be used alone, or a plurality of types may be mixed and used. Among the foregoing, it is preferable to use LiPF₆ from the perspective of ion conductivity, electrochemical stability, and the like. The concentration of the lithium salt is, for example, more than or equal to 0.5 mol and less than or equal to 2 mol per 1 liter of the non-aqueous solvent. Further, vinylene carbonate, a propane sultone based additive, and the like may be added.

### EXAMPLES

While the present disclosure will now be further described using Examples and Comparative Examples, the present disclosure is not limited to the Examples below.

### <Example 1-1>

### [Production of Positive Electrode Active Material]

A composite hydroxide represented by [Ni_{0.90}Co_{0.05}Mn_{0.05}](OH)₂ and obtained by a co-precipitation method was fired at 500 °C for 8 hours, and a metal oxide (Ni_{0.90}Co_{0.05}Mn_{0.05}O₂) was obtained. Next, lithium oxide, the above metal oxide, calcium hydroxide, and tungsten oxide were mixed so that the molar ratio between Li, the total amount of Ni, Co, and Mn, Ca, and W was 1.03:1:0.0025:0.005, and a mixture was thereby obtained (first process). This mixture was fired in an oxygen stream having an oxygen concentration of 95 % (with a flow rate of 2 mL/min per 10 cm³ and 5 L/min per 1 kg of the mixture) at a heating rate of 2.0 °C/min from room temperature to 650 °C, and subsequently at a heating rate of 0.5 °C/min from 650 °C to 780 °C, and a fired product was obtained (second process). Water was added to this fired product so that a slurry concentration of 1500 g/L was obtained, and the slurry was stirred for 15 minutes and then filtered to obtain a cake-like composition. To this cake-like composition, powder H₃BO₃ was added. The amount of H₃BO₃ added was adjusted so that the molar ratio of B to the total amount of Ni, Co, and Mn contained in the lithium transition metal composite oxide was 0.1 mol%. After the adding process, a drying process was carried out in a vacuum environment under the conditions of 180 °C and 2 hours, and a positive electrode active material of Example 1 was thereby obtained (third process).

The obtained positive electrode active material was measured using an ICP emission spectrometer (iCAP6300 manufactured by Thermo Fisher Scientific), and as a result, the elements shown in Table 1 below were observed as elements other than Li, O, and impurity elements. Further, it was confirmed by TEM-EDX that a first surface modification layer containing Ca and W was present at the surface of the secondary particles and at the interface between the primary particles inside the secondary particles. Compounds present in the first surface modification layer were identified by synchrotron radiation X-ray diffraction measurement, and the presence of CaWO₄ was thereby confirmed. Furthermore, it was confirmed by TEM-EDX that a second surface modification layer containing B was present at the surface of the secondary particles.

### [Production of Positive Electrode]

A positive electrode mixture slurry was prepared by mixing together 95 parts by mass of the above positive electrode active material, 3 parts by mass of acetylene black (AB), and 2 parts by mass of polyvinylidene fluoride (PVDF), and further adding thereto an appropriate amount of N-methyl-2-pyrrolidone (NMP). Next, the positive electrode mixture slurry was applied onto both sides of a positive electrode current collector made of aluminum foil, and the applied coating was dried. After that, the coating was rolled using a roller, the resulting product was cut into a predetermined electrode size, and a positive electrode was thereby produced. In a part of the positive electrode, there was provided an exposed portion where a surface of the positive electrode current collector was exposed.

### [Production of Negative Electrode]

Natural graphite was used as the negative electrode active material. A negative electrode mixture slurry was prepared by mixing the negative electrode active material, sodium carboxymethyl cellulose (CMC-Na), and styrene-butadiene rubber (SBR) in a solids mass ratio of 100: 1: 1 in an aqueous solution. Next, the negative electrode mixture slurry was applied onto both sides of a negative electrode current collector made of copper foil, and the applied coating was dried. After that, the coating was rolled using a roller, the resulting product was cut into a predetermined electrode size, and a negative electrode was thereby produced. In a part of the negative electrode, there was provided an exposed portion where a surface of the negative electrode current collector was exposed.

### [Preparation of Non-Aqueous Electrolyte]

Ethylene carbonate (EC), ethyl methyl carbonate (EMC), and dimethyl carbonate (DMC) were mixed together in a volume ratio of 3:3:4. Into this mixed solvent, lithium hexafluorophosphate (LiPF₆) was dissolved to a concentration of 1.2 mol/L, and a non-aqueous electrolyte was thereby prepared.

### [Production of Test Cell]

A positive electrode lead was attached to the exposed portion of the positive electrode, and a negative electrode lead was attached to the exposed portion of the negative electrode. The positive electrode and the negative electrode were wound in a spiral shape with an interposed separator made of polyolefin, and the resulting product was shaped by being pressed in a radial direction to produce a flat-shaped spiral-type electrode assembly. This electrode assembly was housed in an outer casing composed of an aluminum laminate sheet, and after injecting the above-described non-aqueous electrolyte therein, the opening of the outer casing was sealed to obtain a test cell.

### [Evaluation of Capacity Retention Rate]

In a 25 °C environment, the test cell was charged at a constant current of 0.2 It until the battery voltage reached 4.3 V, and then charged at a constant voltage of 4.3 V until the current value reached 0.01 It. After that, the test cell was discharged at a constant current of 0.2 It until the battery voltage reached 2.5 V. Using this charging and discharging process as one cycle, 30 cycles were performed. The capacity retention rate of the test cell over the charge-discharge cycles was calculated by the following formula. Capacity retention rate = (Discharge capacity in the 30th cycle / Discharge capacity in the 1st cycle) × 100

### <Examples 1-2 to 1-4>

Test cells were produced and evaluated in the same manner as in Example 1-1 except that, in the third process in the production of the positive electrode active material, the amount of H₃BO₃ added was adjusted so that the molar ratio of B was 0.5 mol%, 1.0 mol%, and 2.0 mol%, respectively.

### <Example 1-5>

A test cell was produced and evaluated in the same manner as in Example 1 except that, in the third process in the production of the positive electrode active material, Al₂(SO₄)₃•16H₂O (hereinafter referred to as Al₂(SO₄)₃ by omitting the notation of water of hydration) was added instead of H₃BO₃, and the amount of Al₂(SO₄)₃ added was adjusted so that the molar ratio of Al to the total amount of Ni, Co, and Mn contained in the lithium transition metal composite oxide was 0.1 mol%. It was confirmed by TEM-EDX that a second surface modification layer containing Al was present at the surface of the secondary particles.

### <Examples 1-6 to 1-8>

Test cells were produced and evaluated in the same manner as in Example 1-5 except that, in the third process in the production of the positive electrode active material, the amount of Al₂(SO₄)₃ added was adjusted so that the molar ratio of Al was 0.5 mol%, 1.0 mol%, and 2.0 mol%, respectively.

### <Example 1-9>

A test cell was produced and evaluated in the same manner as in Example 1-1 except that, in the third process in the production of the positive electrode active material, Zr(SO₄)₂•4H₂O (hereinafter referred to as Zr(SO₄)₂ by omitting the notation of water of hydration) was added instead of H₃BO₃, and the amount of Zr(SO₄)₂ added was adjusted so that the molar ratio of Zr to the total amount of Ni, Co, and Mn contained in the lithium transition metal composite oxide was 0.1 mol%. It was confirmed by TEM-EDX that a second surface modification layer containing Zr was present at the surface of the secondary particles.

### <Examples 1-10 to 1-12>

Test cells were produced and evaluated in the same manner as in Example 1-9 except that, in the third process in the production of the positive electrode active material, the amount of Zr(SO₄)₂ added was adjusted so that the molar ratio of Zr was 0.5 mol%, 1.0 mol%, and 2.0 mol%, respectively.

### <Example 1-13>

A test cell was produced and evaluated in the same manner as in Example 1-1 except that, in the third process in the production of the positive electrode active material, WO₃ was added instead of H₃BO₃, and the amount of WO₃ added was adjusted so that the molar ratio of W to the total amount of Ni, Co, and Mn contained in the lithium transition metal composite oxide was 0.1 mol%. It was confirmed by TEM-EDX that a second surface modification layer containing W was present at the surface of the secondary particles. Further, it was confirmed by TEM-EDX that the first surface modification layer was formed at the surface of the secondary particles, and that the second surface modification layer was formed on top of the first surface modification layer at the surface of the secondary particles.

### <Examples 1-14 to 1-16>

Test cells were produced and evaluated in the same manner as in Example 1-13 except that, in the third process in the production of the positive electrode active material, the amount of WO₃ added was adjusted so that the molar ratio of W was 0.5 mol%, 1.0 mol%, and 2.0 mol%, respectively.

### <Example 1-17>

A test cell was produced and evaluated in the same manner as in Example 1-1 except that, in the third process in the production of the positive electrode active material, a 30 mass% aqueous solution of titanium sulfate (Ti(SO₄)₂) was added instead of H₃BO₃, and the amount of aqueous titanium sulfate solution added was adjusted so that the molar ratio of Ti to the total amount of Ni, Co, and Mn contained in the lithium transition metal composite oxide was 0.1 mol%. It was confirmed by TEM-EDX that a second surface modification layer containing Ti was present at the surface of the secondary particles.

### <Examples 1-18 to 1-20>

Test cells were produced and evaluated in the same manner as in Example 1-17 except that, in the third process in the production of the positive electrode active material, the amount of aqueous titanium sulfate solution added was adjusted so that the molar ratio of Ti was 0.5 mol%, 1.0 mol%, and 2.0 mol%, respectively.

### <Comparative Example 1-1>

A test cell was produced and evaluated in the same manner as in Example 1-1 except that, in the third process in the production of the positive electrode active material, H₃BO₃ was not added.

### <Comparative Example 1-2>

A test cell was produced and evaluated in the same manner as in Example 1-1 except that Ca(OH)₂ and WO₃ were not added in the first process in the production of the positive electrode active material, and in the third process in the production of the positive electrode active material, the amount of H₃BO₃ added was adjusted so that the molar ratio of B was 0.5 mol%.

### <Comparative Example 1-3>

A test cell was produced and evaluated in the same manner as in Example 1-1 except that Ca(OH)₂ and WO₃ were not added in the first process in the production of the positive electrode active material, and in the third process in the production of the positive electrode active material, Al₂(SO₄)₃ was added instead of H₃BO₃, and the amount of Al₂(SO₄)₃ added was adjusted so that the molar ratio of Al to the total amount of Ni, Co, and Mn contained in the lithium transition metal composite oxide was 0.5 mol%.

### <Comparative Example 1-4>

A test cell was produced and evaluated in the same manner as in Example 1-1 except that Ca(OH)₂ and WO₃ were not added in the first process in the production of the positive electrode active material, and in the third process in the production of the positive electrode active material, Zr(SO₄)₂ was added instead of H₃BO₃, and the amount of Zr(SO₄)₂ added was adjusted so that the molar ratio of Zr to the total amount of Ni, Co, and Mn contained in the lithium transition metal composite oxide was 0.5 mol%.

### <Comparative Example 1-5>

A test cell was produced and evaluated in the same manner as in Example 1-1 except that Ca(OH)₂ and WO₃ were not added in the first process in the production of the positive electrode active material, and in the third process in the production of the positive electrode active material, WO₃ was added instead of H₃BO₃, and the amount of WO₃ added was adjusted so that the molar ratio of W to the total amount of Ni, Co, and Mn contained in the lithium transition metal composite oxide was 0.5 mol%.

### <Comparative Example 1-6>

A test cell was produced and evaluated in the same manner as in Example 1-1 except that Ca(OH)₂ and WO₃ were not added in the first process in the production of the positive electrode active material, and in the third process in the production of the positive electrode active material, an aqueous titanium sulfate solution was added instead of H₃BO₃, and the amount of aqueous titanium sulfate solution added was adjusted so that the molar ratio of Ti to the total amount of Ni, Co, and Mn contained in the lithium transition metal composite oxide was 0.5 mol%.

### <Comparative Example 1-7>

A test cell was produced and evaluated in the same manner as in Example 1-1 except that Ca(OH)₂ and WO₃ were not added in the first process in the production of the positive electrode active material, and H₃BO₃ was not added in the third process.

### <Examples 2-1 to 2-5 and Comparative Example 2-1>

Test cells were produced and evaluated in the same manner as in Examples 1-2, 1-6, 1-10, 1-14, 1-18, and Comparative Example 1-1, respectively, except that, in the first process in the production of the positive electrode active material, the amount of Ca(OH)₂ added was adjusted so that the molar ratio of Ca was 0.5 mol%. Compounds present in the first surface modification layer were identified by synchrotron radiation X-ray diffraction measurement, and the presence of CaWO₄ was thereby confirmed.

### <Examples 3-1 to 3-5 and Comparative Examples 3-1 to 3-7>

Test cells were produced and evaluated in the same manner as in Examples 1-2, 1-6, 1-10, 1-14, 1-18, and Comparative Examples 1-1 to 1-7, respectively, except that the composition of the metal oxide used in the first process in the production of the positive electrode active material was changed to Ni_{0.90}CO_{0.03}Mn_{0.07}O₂.

### <Examples 4-1 to 4-5 and Comparative Example 4-1>

Test cells were produced and evaluated in the same manner as in Examples 1-2, 1-6, 1-10, 1-14, 1-18, and Comparative Example 1-1, respectively, except that, in the first process in the production of the positive electrode active material, Sr(OH)₂ was added instead of Ca(OH)₂, and the amount of Sr(OH)₂ added was adjusted so that the molar ratio of Sr to the total amount of Ni, Co, and Mn contained in the lithium transition metal composite oxide was 0.25 mol%. It was confirmed by TEM-EDX that a first surface modification layer containing Sr and W was present at the surface of the secondary particles and at the interface between the primary particles inside the secondary particles. Compounds present in the first surface modification layer were identified by synchrotron radiation X-ray diffraction measurement, and the presence of SrWO₄ was thereby confirmed.

### <Examples 5-1 to 5-5 and Comparative Examples 5-1 to 5-7>

Test cells were produced and evaluated in the same manner as in Examples 1-2, 1-6, 1-10, 1-14, 1-18, and Comparative Examples 1-1 to 1-7, respectively, except that the composition of the metal oxide used in the first process in the production of the positive electrode active material was changed to Ni_{0.80}Co_{0.10}Mn_{0.10}O₂.

The capacity retention rates of the test cells of the Examples and Comparative Examples are shown in Table 1. Table 1 also shows the composition of the lithium transition metal composite oxide, the amounts of Ca or Sr and W added in the first process, and the element and its amount added in the third process. The capacity retention rates of the test cells of Examples 1-1 to 1-20 and Comparative Examples 1-1 to 1-6 shown in Table 1 are expressed relative to the capacity retention rate of the test cell of Comparative Example 1-7, which is assumed to be 100. The capacity retention rates of the test cells of Examples 2-1 to 2-5 and Comparative Example 2-1 shown in Table 2 are expressed relative to the capacity retention rate of the test cell of Comparative Example 1-7, which is assumed to be 100. The capacity retention rates of the test cells of Examples 3-1 to 3-5 and Comparative Examples 3-1 to 3-6 shown in Table 3 are expressed relative to the capacity retention rate of the test cell of Comparative Example 3-7, which is assumed to be 100. The capacity retention rates of the test cells of Examples 4-1 to 4-5 and Comparative Example 4-1 shown in Table 4 are expressed relative to the capacity retention rate of the test cell of Comparative Example 1-7, which is assumed to be 100. The capacity retention rates of the test cells of Examples 5-1 to 5-5 and Comparative Examples 5-1 to 5-6 shown in Table 5 are expressed relatively to the capacity retention rate of the test cell of Comparative Example 5-7, which is assumed to be 100.

**[Table 1]**

| | Composition of lithium transition metal composite oxide [mol%] | | | First process Amounts of Ca/W added [mol%] | Third process | | Capacity retention rate |
|---|---|---|---|---|---|---|---|
| | Ni | Co | Mn | | Added element | Amount added [mol%] | |
| Example 1-1 | 90 | 5 | 5 | 0.25/0.5 | B | 0.1 | 103.0 |
| Example 1-2 | 90 | 5 | 5 | 0.25/0.5 | B | 0.5 | 103.9 |
| Example 1-3 | 90 | 5 | 5 | 0.25/0.5 | B | 1.0 | 104.5 |
| Example 1-4 | 90 | 5 | 5 | 0.25/0.5 | B | 2.0 | 104.1 |
| Example 1-5 | 90 | 5 | 5 | 0.25/0.5 | Al | 0.1 | 103.2 |
| Example 1-6 | 90 | 5 | 5 | 0.25/0.5 | Al | 0.5 | 103.6 |
| Example 1-7 | 90 | 5 | 5 | 0.25/0.5 | Al | 1.0 | 103.6 |
| Example 1-8 | 90 | 5 | 5 | 0.25/0.5 | Al | 2.0 | 103.4 |
| Example 1-9 | 90 | 5 | 5 | 0.25/0.5 | Zr | 0.1 | 103.0 |
| Example 1-10 | 90 | 5 | 5 | 0.25/0.5 | Zr | 0.5 | 103.5 |
| Example 1-11 | 90 | 5 | 5 | 0.25/0.5 | Zr | 1.0 | 104.0 |
| Example 1-12 | 90 | 5 | 5 | 0.25/0.5 | Zr | 2.0 | 103.5 |
| Example 1-13 | 90 | 5 | 5 | 0.25/0.5 | W | 0.1 | 102.8 |
| Example 1-14 | 90 | 5 | 5 | 0.25/0.5 | W | 0.5 | 103.3 |
| Example 1-15 | 90 | 5 | 5 | 0.25/0.5 | W | 1.0 | 103.2 |
| Example 1-16 | 90 | 5 | 5 | 0.25/0.5 | W | 2.0 | 103.2 |
| Example 1-17 | 90 | 5 | 5 | 0.25/0.5 | Ti | 0.1 | 102.7 |
| Example 1-18 | 90 | 5 | 5 | 0.25/0.5 | Ti | 0.5 | 103.1 |
| Example 1-19 | 90 | 5 | 5 | 0.25/0.5 | Ti | 1.0 | 103.1 |
| Example 1-20 | 90 | 5 | 5 | 0.25/0.5 | Ti | 2.0 | 103.0 |
| Comparative Example 1-1 | 90 | 5 | 5 | 0.25/0.5 | - | - | 101.0 |
| Comparative Example 1-2 | 90 | 5 | 5 | - | B | 0.5 | 101.3 |
| Comparative Example 1-3 | 90 | 5 | 5 | - | Al | 0.5 | 101.2 |
| Comparative Example 1-4 | 90 | 5 | 5 | - | Zr | 0.5 | 101.5 |
| Comparative Example 1-5 | 90 | 5 | 5 | - | W | 0.5 | 100.8 |
| Comparative Example 1-6 | 90 | 5 | 5 | - | Ti | 0.5 | 100.6 |
| Comparative Example 1-7 | 90 | 5 | 5 | - | - | - | 100 |

**[Table 2]**

| | Composition of lithium transition metal composite oxide [mol%] | | | First process Amounts of Ca/W added [mol%] | Third process | | Capacity retention rate |
|---|---|---|---|---|---|---|---|
| | Ni | Co | Mn | | Added element | Amount added [mol%] | |
| Example 2-1 | 90 | 5 | 5 | 0.5/0.5 | B | 0.5 | 103.9 |
| Example 2-2 | 90 | 5 | 5 | 0.5/0.5 | Al | 0.5 | 103.9 |
| Example 2-3 | 90 | 5 | 5 | 0.5/0.5 | Zr | 0.5 | 104.0 |
| Example 2-4 | 90 | 5 | 5 | 0.5/0.5 | W | 0.5 | 103.7 |
| Example 2-5 | 90 | 5 | 5 | 0.5/0.5 | Ti | 0.5 | 103.5 |
| Comparative Example 2-1 | 90 | 5 | 5 | 0.5/0.5 | - | - | 101.2 |
| Comparative Example 1-2 | 90 | 5 | 5 | - | B | 0.5 | 101.3 |
| Comparative Example 1-3 | 90 | 5 | 5 | - | Al | 0.5 | 101.2 |
| Comparative Example 1-4 | 90 | 5 | 5 | - | Zr | 0.5 | 101.5 |
| Comparative Example 1-5 | 90 | 5 | 5 | - | W | 0.5 | 100.8 |
| Comparative Example 1-6 | 90 | 5 | 5 | - | Ti | 0.5 | 100.6 |
| Comparative Example 1-7 | 90 | 5 | 5 | - | - | - | 100 |

**[Table 3]**

| | Composition of lithium transition metal composite oxide [mol%] | | | First process Amounts of Ca/W added [mol%] | Third process | | Capacity retention rate |
|---|---|---|---|---|---|---|---|
| | Ni | Co | Mn | | Added element | Amount added [mol%] | |
| Example 3-1 | 90 | 3 | 7 | 0.25/0.5 | B | 0.5 | 104.2 |
| Example 3-2 | 90 | 3 | 7 | 0.25/0.5 | Al | 0.5 | 104.7 |
| Example 3-3 | 90 | 3 | 7 | 0.25/0.5 | Zr | 0.5 | 105.2 |
| Example 3-4 | 90 | 3 | 7 | 0.25/0.5 | W | 0.5 | 103.8 |
| Example 3-5 | 90 | 3 | 7 | 0.25/0.5 | Ti | 0.5 | 103.6 |
| Comparative Example 3-1 | 90 | 3 | 7 | 0.25/0.5 | - | - | 101.1 |
| Comparative Example 3-2 | 90 | 3 | 7 | - | B | 0.5 | 101.3 |
| Comparative Example 3-3 | 90 | 3 | 7 | - | Al | 0.5 | 101.4 |
| Comparative Example 3-4 | 90 | 3 | 7 | - | Zr | 0.5 | 101.7 |
| Comparative Example 3-5 | 90 | 3 | 7 | - | W | 0.5 | 100.9 |
| Comparative Example 3-6 | 90 | 3 | 7 | - | Ti | 0.5 | 100.8 |
| Comparative Example 3-7 | 90 | 3 | 7 | - | - | - | 100 |

**[Table 4]**

| | Composition of lithium transition metal composite oxide [mol%] | | | First process Amounts of Sr/W added [mol%] | Third process | | Capacity retention rate |
|---|---|---|---|---|---|---|---|
| | Ni | Co | Mn | | Added element | Amount added [mol%] | |
| Example 4-1 | 90 | 5 | 5 | 0.25/0.5 | B | 0.5 | 103.3 |
| Example 4-2 | 90 | 5 | 5 | 0.25/0.5 | Al | 0.5 | 103.5 |
| Example 4-3 | 90 | 5 | 5 | 0.25/0.5 | Zr | 0.5 | 103.4 |
| Example 4-4 | 90 | 5 | 5 | 0.25/0.5 | W | 0.5 | 103.0 |
| Example 4-5 | 90 | 5 | 5 | 0.25/0.5 | Ti | 0.5 | 103.0 |
| Comparative Example 4-1 | 90 | 5 | 5 | 0.25/0.5 | - | - | 100.9 |
| Comparative Example 1-2 | 90 | 5 | 5 | - | B | 0.5 | 101.3 |
| Comparative Example 1-3 | 90 | 5 | 5 | - | Al | 0.5 | 101.2 |
| Comparative Example 1-4 | 90 | 5 | 5 | - | Zr | 0.5 | 101.5 |
| Comparative Example 1-5 | 90 | 5 | 5 | - | W | 0.5 | 100.8 |
| Comparative Example 1-6 | 90 | 5 | 5 | - | Ti | 0.5 | 100.6 |
| Comparative Example 1-7 | 90 | 5 | 5 | - | - | - | 100 |

**[Table 5]**

| | Composition of lithium transition metal composite oxide [mol%] | | | First process Amounts of Ca/W added [mol%] | Third process | | Capacity retention rate |
|---|---|---|---|---|---|---|---|
| | Ni | Co | Mn | | Added element | Amount added [mol%] | |
| Example 5-1 | 80 | 10 | 10 | 0.25/0.5 | B | 0.5 | 103.3 |
| Example 5-2 | 80 | 10 | 10 | 0.25/0.5 | Al | 0.5 | 103.8 |
| Example 5-3 | 80 | 10 | 10 | 0.25/0.5 | Zr | 0.5 | 104.5 |
| Example 5-4 | 80 | 10 | 10 | 0.25/0.5 | W | 0.5 | 103.1 |
| Example 5-5 | 80 | 10 | 10 | 0.25/0.5 | Ti | 0.5 | 103.0 |
| Comparative Example 5-1 | 80 | 10 | 10 | 0.25/0.5 | - | - | 100.7 |
| Comparative Example 5-2 | 80 | 10 | 10 | - | B | 0.5 | 100.8 |
| Comparative Example 5-3 | 80 | 10 | 10 | - | Al | 0.5 | 100.6 |
| Comparative Example 5-4 | 80 | 10 | 10 | - | Zr | 0.5 | 100.9 |
| Comparative Example 5-5 | 80 | 10 | 10 | - | W | 0.5 | 100.5 |
| Comparative Example 5-6 | 80 | 10 | 10 | - | Ti | 0.5 | 100.4 |
| Comparative Example 5-7 | 80 | 10 | 10 | - | - | - | 100 |

In each of Tables 1 to 5, the test cells of the Examples had a higher capacity retention rate than the test cells of the Comparative Examples. Accordingly, it can be seen that the charge-discharge cycle characteristic is improved by forming, in a lithium transition metal composite oxide having a predetermined composition, a first surface modification layer containing at least one element selected from Ca and Sr and also containing at least one element selected from the group consisting of W, Mo, Ti, Si, Nb, and Zr at the surface of the primary particles, and a second surface modification layer containing at least one element selected from the group consisting of Al, Zr, B, W, Ti, Mg, Co, and Si at the surface of the secondary particles.

The present disclosure is further illustrated by the following embodiments.

### Configuration 1:

A positive electrode active material for non-aqueous electrolyte secondary battery, including
a lithium transition metal composite oxide which has a layered structure and which is represented by general formula LiₓNiₐCo_{b}Mn_{c}M1_{d}O_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 ≤ y < 0.05, a+b+c+d = 1, and M1 is at least one element selected from the group consisting of W, Mg, Mo, Nb, Ti, Si, Al, and Zr), wherein
the lithium transition metal composite oxide includes secondary particles formed by aggregation of primary particles,
a first surface modification layer containing at least one of Ca and Sr and also containing at least one element selected from the group consisting of W, Mo, Ti, Si, Nb, and Zr is present at a surface of the primary particles, and
a second surface modification layer containing at least one element selected from the group consisting of Al, Zr, B, W, Ti, Mg, Co, and Si is present at a surface of the secondary particles.

### Configuration 2:

The positive electrode active material for non-aqueous electrolyte secondary battery according to Configuration 1, wherein a total amount of Ca and Sr contained in the first surface modification layer is less than or equal to 3 mol% based on a total number of moles of metal elements other than Li in the lithium transition metal composite oxide. Configuration 3:

The positive electrode active material for non-aqueous electrolyte secondary battery according to Configuration 1 or 2, wherein a total amount of W, Mo, Ti, Si, Nb, and Zr contained in the first surface modification layer is less than or equal to 2 mol% based on a total number of moles of metal elements other than Li in the lithium transition metal composite oxide.

### Configuration 4:

The positive electrode active material for non-aqueous electrolyte secondary battery according to any one of Configurations 1 to 3, wherein a total amount of Al, Zr, B, W, Ti, Mg, Co, and Si contained in the second surface modification layer is less than or equal to 2 mol% based on a total number of moles of metal elements other than Li in the lithium transition metal composite oxide.

### Configuration 5:

The positive electrode active material for non-aqueous electrolyte secondary battery according to any one of Configurations 1 to 4, wherein a compound represented by general formula M2_{α}M3_{β}O_{γ} (where 1 ≤ α ≤ 2, 1 ≤ β ≤ 5, 4 ≤ γ ≤ 9, M2 is at least one element selected from Ca and Sr, and M3 is at least one element selected from the group consisting of W, Mo, Ti, Si, Nb, and Zr) is adhered to the surface of the primary particles of the lithium transition metal composite oxide.

### Configuration 6:

A non-aqueous electrolyte secondary battery, comprising a positive electrode including the positive electrode active material for non-aqueous electrolyte secondary battery according to any one of Configurations 1 to 5, a negative electrode, and a non-aqueous electrolyte.

### REFERENCE SIGNS LIST

10 secondary battery; 11 positive electrode; 12 negative electrode; 13 separator; 14 electrode assembly; 16 outer casing; 17 sealing assembly; 18, 19 insulation plate; 20 positive electrode lead; 21 negative electrode lead; 22 grooved portion; 23 internal terminal plate; 24 lower vent member; 25 insulation member; 26 upper vent member; 27 cap; 28 gasket.

## Claims

1. A positive electrode active material for non-aqueous electrolyte secondary battery, including
a lithium transition metal composite oxide which has a layered structure and which is represented by general formula LiₓNiₐCo_{b}Mn_{c}M1_{d}O_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 ≤ y < 0.05, a+b+c+d = 1, and M1 is at least one element selected from the group consisting of W, Mg, Mo, Nb, Ti, Si, Al, and Zr), wherein
the lithium transition metal composite oxide includes secondary particles formed by aggregation of primary particles,
a first surface modification layer containing at least one of Ca and Sr and also containing at least one element selected from the group consisting of W, Mo, Ti, Si, Nb, and Zr is present at a surface of the primary particles, and
a second surface modification layer containing at least one element selected from the group consisting of Al, Zr, B, W, Ti, Mg, Co, and Si is present at a surface of the secondary particles.

2. The positive electrode active material for non-aqueous electrolyte secondary battery according to claim 1, wherein a total amount of Ca and Sr contained in the first surface modification layer is less than or equal to 3 mol% based on a total number of moles of metal elements other than Li in the lithium transition metal composite oxide.

3. The positive electrode active material for non-aqueous electrolyte secondary battery according to claim 1, wherein a total amount of W, Mo, Ti, Si, Nb, and Zr contained in the first surface modification layer is less than or equal to 2 mol% based on a total number of moles of metal elements other than Li in the lithium transition metal composite oxide.

4. The positive electrode active material for non-aqueous electrolyte secondary battery according to claim 1, wherein a total amount of Al, Zr, B, W, Ti, Mg, Co, and Si contained in the second surface modification layer is less than or equal to 2 mol% based on a total number of moles of metal elements other than Li in the lithium transition metal composite oxide.

5. The positive electrode active material for non-aqueous electrolyte secondary battery according to claim 1, wherein a compound represented by general formula M2_{α}M3_{β}O_{γ} (where 1 ≤ α ≤ 2, 1 ≤ β ≤ 5, 4 ≤ γ ≤ 9, M2 is at least one element selected from Ca and Sr, and M3 is at least one element selected from the group consisting of W, Mo, Ti, Si, Nb, and Zr) is adhered to the surface of the primary particles of the lithium transition metal composite oxide.

6. A non-aqueous electrolyte secondary battery, comprising a positive electrode including the positive electrode active material for non-aqueous electrolyte secondary battery according to any one of claims 1 to 5, a negative electrode, and a non-aqueous electrolyte.
